(19) Europäisches Patentamt / European Patent Office / Office européen des brevets

(11) **EP 2 497 755 B1**

(12) **EUROPEAN PATENT SPECIFICATION**

(45) Date of publication and mention
of the grant of the patent:
**21.10.2015 Bulletin 2015/43**

(51) Int Cl.:
***C03B 37/014*** *(2006.01)*

(21) Application number: **12158732.3**

(22) Date of filing: **09.03.2012**

(54) **Method of manufacturing fluorine-containing optical fiber base material**

Verfahren zur Herstellung einer fluorhaltigen optischen Faservorform

Procédé de fabrication d'une préforme de fibre optique contenant du fluor

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2011 JP 2011052634**

(43) Date of publication of application:
**12.09.2012 Bulletin 2012/37**

(73) Proprietor: **Shin-Etsu Chemical Co., Ltd.
Tokyo 100-0004 (JP)**

(72) Inventor: **Urata, Yuhei
Annaka-shi, Gunma 379-0195 (JP)**

(74) Representative: **Michalski Hüttermann & Partner Patentanwälte mbB
Speditionstraße 21
40221 Düsseldorf (DE)**

(56) References cited:
JP-A- 1 286 932     JP-A- 2002 274 876
JP-A- 2004 345 902   US-A- 5 306 322
US-A1- 2001 043 782  US-A1- 2004 151 455

- TANDON ET AL: "Doping of silica during sintering", JOURNAL OF NON-CRYSTALLINE SOLIDS, NORTH-HOLLAND PHYSICS PUBLISHING. AMSTERDAM, NL, vol. 351, no. 16-17, 1 June 2005 (2005-06-01), pages 1466-1472, XP027660835, ISSN: 0022-3093 [retrieved on 2005-06-01]

EP 2 497 755 B1

**Description**

BACKGROUND

1. TECHNICAL FIELD

The present invention relates to a method of manufacturing a fluorine-containing optical fiber base material. More specifically, the invention relates to a method of manufacturing a glass base material for an optical fiber in which fluorine is evenly added in its radial direction, in particular, to a method of manufacturing a fluorine-containing optical fiber base material in which variation in relative refractive index difference Δ in the radial direction of the base material can be reduced.

2. RELATED ART

Optical fibers have a cladding which surrounds an outer surface of a core of the optical fiber propagating light to prevent light leakage therefrom. The core portion has a higher refractive index than that of the cladding portion. Characteristics of optical fibers are defined by their refractive-index distributions. In order to obtain desired characteristics of an optical fiber, generally, germanium (Ge) which increases the refractive index or fluorine which lowers the refractive index are added to the optical fiber made of synthetic silica. One of techniques to add fluorine into optical fibers is performing a heat treatment under a fluorine compound gas atmosphere onto a porous glass stack which is formed by a VAD method or the like. After fluorine is added, the porous glass stack is further heated at a higher processing temperature in order to make the glass transparent, and then a fluorine-containing optical fiber base material is obtained.
However, when the outside diameter of the porous glass stack is large and/or a target density of fluorine added in the porous glass stack is high, the fluorine which has been added in the previous process can be desorbed or stripped when it is subjected to a high temperature during the heating process for making the stack into a transparent glass. As a result, the optical fiber base material would have an unequal concentration along its radial direction.
JP 1 286 932 describes a glass soot that is deposited on an outer circumference or a tip of a starting member by CVD reaction, etc., to form a porous glass preform. The preform is made transparent by heating in a halogen-containing gas atmosphere, e.g. $CF_4$ or $SiF_4$. Within such process, the concentration of the halogen-containing gas is varied according to the heat-treatment temperature to keep the halogen concentration diffused into the preform and uniformize the refractive index.
JP 2004 345902 describes a method for manufacturing a quartz glass comprising a process for adding fluorine into the porous quartz glass preform by heating the porous quartz glass preform under a fluorine compound-containing atmosphere and a successive process for heating at a higher temperature under a fluorine compound-containing atmosphere.

SUMMARY

Therefore, it is an object of an aspect of the innovations herein to provide a method for manufacturing a fluorine-containing optical fiber base material in which fluorine can be added evenly along a radial direction and variation in relative refractive index difference Δ in the radial direction can be reduced, which is capable of overcoming the above drawbacks accompanying the related art.
In a first aspect of the innovations, it is an object of the invention to provide a method of manufacturing a fluorine-containing optical fiber base material and a fluorine-containing optical fiber base material thereof, which are capable of overcoming the above drawbacks accompanying the related art. The above and other objects can be achieved by combinations described in the claims. In the first aspect of the innovations, provided is a method of manufacturing a fluorine-containing optical fiber base material through a sintering process. The sintering process includes a first step in which a porous glass stack is dehydrated by heating the porous glass stack under a chlorine-based gas atmosphere, a second step in which fluorine is added into the porous glass stack by heating the porous glass stack under a fluorine source gas atmosphere, and a third step in which the porous glass stack is made transparent by heating the porous glass stack at a higher temperature than the second step under a fluorine source gas atmosphere. Here, process temperatures in the first, second and third steps are $T_1$, $T_2$ and $T_3$ (K) respectively, concentrations of the fluorine source gas in the second and third steps are $C_2$ and $C_3$ (%) respectively, a parameter Q is represented by the formula $Q = C_2 \times \exp(-T_2/T_1) + C_3 \times \exp(-T_3/T_2)$, and the process temperatures and the concentrations of the fluorine source gas satisfy the relation $Q > 0.14$.
In a second aspect of the innovations, the concentration $C_2$ of the fluorine source gas in the second step may be equal to or above the concentration $C_3$ of the fluorine source gas in the third step.
In a third aspect of the innovations, the process temperature $T_1$ in the first step may be equal to or above the

process temperature $T_2$ in the second step.

In a fourth aspect of the innovations, a value of the parameter Q may be 0.27 or greater.

BRIEF DESCRIPTION OF THE DRAWINGS

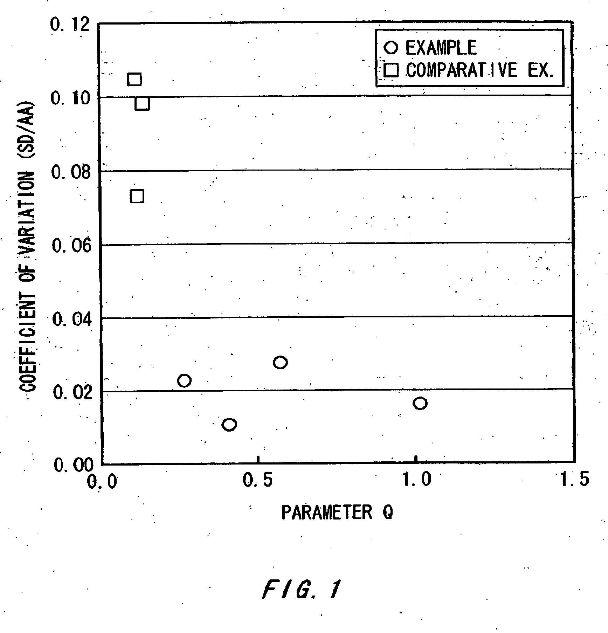

Fig. 1 is a graph showing a relationship between a value of a parameter Q and a coefficient of variation for relative refractive index difference Δ of a fluorine added layer.

DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

According to an aspect of the invention, a manufacturing method for an optical fiber base material includes a sintering process including a first step in which a porous glass stack is dehydrated using a chlorine-based gas, a second step in which fluorine is added, and a third step in which the glass is made transparent under a gas atmosphere containing a fluorine source, in order to obtain a fluorine-containing optical fiber base material. The fluorine-containing optical fiber base material is manufactured at process temperatures and fluorine-source gas concentrations with which a parameter Q in the formula $Q = C_2 \times \exp(-T_2/T_1) + C_3 \times \exp(-T_3/T_2)$ satisfies $Q > 0.14$, where $T_1$, $T_2$ and $T_3$ (K) are process temperatures for the first, second and third steps respectively, and $C_2$ and $C_3$ (%) are fluorine-source gas concentrations in the second and third steps respectively. The reason why a value of the parameter Q is set to the range $Q > 0.14$ is that if Q is 0.14 or less, a coefficient of variation for the relative refractive index difference Δ of the fluorine added layer along its radial direction will exceed 0.03 and an optical fiber with fine optical characteristics cannot be obtained.

Although fluorine addition to a porous glass stack and a process to make the glass transparent according to the invention will be hereunder described in conjunction with examples and comparative examples, it should be understood that the present invention is not limited to such examples but various embodiments are possible.

Example 1

A porous glass stack was first inserted in a furnace core tube and placed above a heater. The glass stack was heated to 1100 °C (1373K) and then $Cl_2$ as a chlorine-based gas was introduced along with an inert gas (He) into the furnace core tube. The porous glass stack was gradually moved downward from above the heater to dehydrate the porous glass stack from its lower end (the first step). The porous glass stack was again placed over the heater, the temperature was maintained at 1100 °C, and an inert gas (Fe) and a fluorine compound gas ($SiF_4$; 0.75%) was introduced into the furnace core tube. The porous glass stack was then gradually moved downward from above the heater to add fluorine therein (the second step).

Again the porous glass stack was placed above the heater, the temperature was raised to 1420 °C (1693K) at which the porous glass stack can be made transparent. An inert gas (He) and a fluorine compound gas ($SiF_4$; 0.30%) were subsequently introduced into the furnace core tube, and the porous glass stack was then gradually moved downward from above the heater to make the glass stack transparent while adding fluorine therein (the third step). A value of Q which was calculated from the formula $Q = C_2 \times \exp(-T_2/T_1) + C_3 \times \exp(-T_3/T_2)$ was 0.41 in this example. According to such method, the fluorine compound gas was introduced also in the third step so that desorption and stripping of the fluorine added in the second step could be controlled even though the porous glass stack was subjected to the high temperature to obtain the transparent glass. As a result, a coefficient of variation (standard deviation/arithmetic average) for the relative refractive index difference Δ along the radial direction of the fluorine added layer in the porous glass stack was 0.011.

Examples 2 through 4

The process temperatures $T_1$, $T_2$ and $T_3$ (K) in the first, second and third steps and the fluorine-source gas concentrations $C_2$ and $C_3$ (%) in the second and third steps were adequately set such that a value of Q calculated from the formula $Q = C_2 \times \exp(-T_2/T_1) + C_3 \times \exp(-T_3/T_2)$ satisfies $Q > 0.14$. Fluorine was added to the porous glass stack and the porous glass stack was then made transparent in the same manner as the above Example 1 except for different values of Q. Process conditions for each example were shown in Table 1 below.

The fluorine-source gas concentration $C_2$ in the second step may be higher than the fluorine-source gas concentration $C_3$ in the third step. The process temperature $T_1$ in the first step may be higher than the process temperature $T_2$ in the second step.

Consequently, as shown in Table 1, a coefficient of variation for the relative refractive index difference Δ was below 0.03 in all of the examples.

[Table 1]

| | FIRST STEP TEMP. (K) | SECOND STEP | | THIRD STEP | | PARAMETER Q (-) | COEFFICIENT OF VARIATION (-) |
|---|---|---|---|---|---|---|---|
| | | TEMP. (K) | SiF4 CONC. (%) | TEMP. (K) | SiF4 CONC. (%) | | |
| EXAMPLE 1 | 1373 | 1373 | 0.75 | 1693 | 0.30 | 0.41 | 0.011 |
| EXAMPLE 2 | 1373 | 1373 | 125 | 1693 | 1.25 | 1.02 | 0.017 |
| EXAMPLE 3 | 1373 | 1373 | 1.25 | 1673 | 0.25 | 0.57 | 0.028 |
| EXAMPLE 4 | 1373 | 1323 | 0.50 | 1693 | 0.20 | 0.27 | 0.023 |

Comparative Example 1 through 3

In Comparative Example 1 through 3, fluorine was added to the porous glass stack and the porous glass stack was made transparent in the same manner as the above Example 1 except for the sintering gas condition, in other words, a value of Q. Process conditions for each comparative example were shown in Table 2 below. In the comparative examples, values of Q were made smaller than the above examples, and consequently coefficients of variation for the relative refractive index difference $\Delta$ were above 0.03.

[Table 2]

| | FIRST STEP TEMP. (K) | SECOND STEP | | THIRD STEP | | PARAMETER Q (-) | COEFFICIENT OF VARIATION (-) |
|---|---|---|---|---|---|---|---|
| | | TEMP. (K) | SiF4 CONC. (%) | TEMP. (K) | SiF4 CONC. (%) | | |
| COMPARATIVE EXAMPLE 1 | 1373 | 1373 | 0.25 | 1693 | 0.10 | 0.14 | 0.098 |
| COMPARATIVE EXAMPLE 2 | 1373 | 1373 | 0.25 | 1693 | 0.05 | 0.11 | 0.105 |
| COMPARATIVE EXAMPLE 3 | 1373 | 1323 | 0.15 | 1673 | 0.15 | 0.12 | 0.074 |

Fig. 1 illustrates a relationship between the values of Q and the coefficients of variation for the relative refractive index difference $\Delta$. As shown in the above results, it was demonstrated that a fluorine-containing optical fiber base material with a small variation in relative refractive index difference $\Delta$ along the radial direction of its fluorine added layer could be manufactured by introducing a fluorine compound gas into the furnace core tube in the step of making the glass stack transparent after the step of fluorine addition, and setting a sintering condition such that a value of Q represented by the formula $Q = C_2 \times \exp(-T_2/T_1) + C_3 \times \exp(-T_2/T_1)$ satisfies $Q > 0.14$.

The sintering condition can also be set such that the value of the parameter Q is 0.27 or above in order to manufacture a fluorine-containing optical fiber base material with a small variation in relative refractive index difference $\Delta$ along the radial direction of its fluorine added layer.

In this way, it is also possible to manufacture a fluorine-containing optical fiber with a small variation in relative refractive index difference $\Delta$ along the radial direction of its fluorine added layer.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

As described above, according to the embodiments of the invention, even when an outer diameter of the porous glass stack is large and/or a target fluorine adding concentration is high, it is possible to realize a manufacturing method for a fluorine-containing optical fiber base material with a very small variation coefficient (standard deviation/arithmetic average) for relative refractive index difference $\Delta$ along the radial direction of its fluorine added layer.

**Claims**

1. A method of manufacturing a fluorine-containing optical fiber base material through a sintering process, the sintering process comprising;

    dehydrating a porous glass stack by heating the porous glass stack under a chlorine-based gas atmosphere;

    adding fluorine into the porous glass stack by heating the porous glass stack under a fluorine source gas atmosphere; and

    making the porous glass stack transparent by heating the porous glass stack under a fluorine source gas atmosphere at a higher temperature than a temperature at which the porous glass stack is heated in the adding, wherein process temperatures in the dehydrating, adding and making are $T_1$, $T_2$ and $T_3$ (K) respectively, concentrations of the fluorine source gas in the adding and making are $C_2$ and $C_3$ (%) respectively, a parameter Q is represented by the formula:

$$Q = C_2 \times \exp(-T_2/T_1) + C_3 \times \exp(-T_3/T_2),$$

    and the process temperatures and the concentrations of the fluorine source gas satisfy the relation Q > 0.14.

2. The method of manufacturing a fluorine-containing optical fiber base material according to Claim 1, wherein the concentration $C_2$ of the fluorine source gas in the adding is equal to or above the concentration $C_3$ of the fluorine source gas in the making.

3. The method of manufacturing a fluorine-containing optical fiber base material according to Claim 1 or Claim 2, wherein the process temperature $T_1$ in the dehydrating is equal to or above the process temperature $T_2$ in the adding.

4. The method of manufacturing a fluorine-containing optical fiber base material according to any one of Claims 1-3, wherein a value of the parameter Q is 0.27 or greater.

**Patentansprüche**

1. Verfahren zum Herstellen eines fluorhaltigen Basismaterials für eine optische Faser durch einen Sinterprozess, wobei der Sinterprozess die Schritte aufweist:

    Dehydratisieren eines porösen Glasstapels durch Erwärmen des porösen Glasstapels in einer Gasatmosphäre auf Chlorbasis;

    Zusetzen von Fluor in den porösen Glasstapel durch Erwärmen des porösen Glasstapels unter einer Fluorquellengasatmosphäre; und

    Transparentmachen des porösen Glasstapels durch Erwärmen des porösen Glasstapels unter einer Fluorquellengasatmosphäre bei einer Temperatur, die höher ist als die Temperatur, auf die der poröse Glasstapel im Schritt zum Zusetzen von Fluor erwärmt wird, wobei, wenn die Prozesstemperaturen beim Dehydratisieren, Zusetzen von Fluor und Transparentmachen des Glasstapels $T_1$, $T_2$ bzw. $T_3$ (K) und die Konzentrationen des Fluorquellengas beim Zusetzen von Fluor und Transparentmachen des Glasstapels $C_2$ bzw. $C_3$ (%) betragen, ein Parameter Q dargestellt wird durch die Formel:

$$Q = C_2 \times \exp(-T_2/T_1) + C_3 \times \exp(-T_3/T_2),$$

    wobei die Prozesstemperaturen und die Konzentrationen des Fluorquellengases die Beziehung Q > 0,14 erfüllen.

**2.** Verfahren nach Anspruch 1, wobei
die Konzentration $C_2$ des Fluorquellengases im Schritt zum Zusetzen von Fluor größer oder gleich der Konzentration $C_3$ des Fluorquellengas im Schritt zum Transparentmachen des Glasstapels ist.

**3.** Verfahren nach Anspruch 1 oder 2, wobei
die Prozesstemperatur $T_1$ im Dehydratisierungsschritt größer oder gleich der Prozesstemperatur $T_2$ im Schritt zum Zusetzen von Fluor ist.

**4.** Verfahren nach einem der Ansprüche 1 bis 3, wobei ein Wert des Parameters Q 0,27 oder mehr beträgt.


**Revendications**

**1.** Procédé de fabrication d'un matériau de base pour fibre optique contenant du fluor par un procédé de frittage, le procédé de frittage comprenant :

la déshydratation d'un empilement de verre poreux en chauffant l'empilement de verre poreux dans une atmosphère gazeuse à base de chlore ;
l'addition de fluor dans l'empilement de verre poreux en chauffant l'empilement de verre poreux dans une atmosphère gazeuse source de fluor ; et
l'obtention de la transparence de l'empilement de verre poreux en chauffant l'empilement de verre poreux dans une atmosphère gazeuse source de fluor à une température plus élevée que la température à laquelle l'empilement de verre poreux est chauffé pendant l'addition, dans lequel
les températures des processus de déshydratation, d'addition et de l'obtention sont $T_1$, $T_2$ et $T_3$ (°K) respectivement, les concentrations du gaz source de fluor pendant l'addition et l'obtention sont $C_2$ et $C_3$ (%) respectivement, le paramètre Q est représenté par la formule :

$$Q = C_2 \text{ x } \exp(-T_2/T_1) + C_3 \text{ x } \exp(-T_3/T_2),$$

et les températures des processus et les concentrations du gaz source de fluor satisfont la relation Q > 0,14.

**2.** Procédé de fabrication d'un matériau de base pour fibre optique contenant du fluor selon la revendication 1, dans lequel
la concentration $C_2$ du gaz source de fluor pendant l'addition est égale ou est au dessus de la concentration $C_3$ du gaz source de fluor de la phase d'obtention.

**3.** Procédé de fabrication d'un matériau de base pour fibre optique contenant du fluor selon la revendication 1 ou la revendication 2, dans lequel
la température $T_1$ du procédé pendant la déshydratation est égale ou est au dessus de la température $T_2$ de l'addition.

**4.** Procédé de fabrication d'un matériau de base pour fibre optique contenant du fluor selon l'une quelconque des revendications 1 à 3, dans lequel la valeur du paramètre Q est égale ou supérieure à 0,27.

*FIG. 1*

**EP 2 497 755 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1286932 A

- JP 2004345902 A